# FASCICULE DE BREVET EUROPEEN

(11) **EP 1 554 687 B1**
(45) Date de publication et mention de la délivrance du brevet: **18.10.2006**
(21) Numéro de dépôt: 03790989.2
(22) Date de dépôt: 27.08.2003
(51) Int. Cl.: G06K 9/62

(54) **SystEme associatif flou de description d objets multimEdia**
SYSTEM ZUM FUZZY-ASSOZIATIVEN BESCHREIBEN VON MULTIMEDIA-GEGENSTÄNDEN
FUZZY ASSOCIATIVE SYSTEM FOR MULTIMEDIA OBJECT DESCRIPTION

(30) Priorité: 30.08.2002 FR 0210776
(43) Date de publication de la demande: 20.07.2005
(73) Titulaire: FRANCE TELECOM, 75015 Paris (FR)
(72) Inventeur: LANCIERI, Luigi, F-14210 Evrecy (FR)
(74) Mandataire: Barbin le Bourhis, Joël
(86) Numéro de dépôt international: PCT/FR2003/002588
(87) Numéro de publication internationale: WO 2004/021265

(56) Documents cités:
- EP-A- 1 026 601
- WO-A-01/03008
- WO-A-01/24056
- KURITA T ET AL: "Learning of personal visual impression for image database systems" PROCEEDINGS OF THE INTERNATIONAL CONFERENCE ON DOCUMENT ANALYSIS AND RECOGNITION, XX, XX, 20 octobre 1993 (1993-10-20), pages 547-552, XP002095632
- WU J-K: "CONTENT-BASED INDEXING OF MULTIMEDIA DATABASES" IEEE TRANSACTIONS ON KNOWLEDGE AND DATA ENGINEERING, IEEE INC. NEW YORK, US, vol. 9, no. 6, novembre 1997 (1997-11), pages 978-989, XP002930759 ISSN: 1041-4347

## Description

L'invention concerne la caractérisation d'objets multimédia, et en particulier les techniques pour réduire les ambiguïtés de la reconnaissance d'objets multimédia.

L'invention concerne ainsi, notamment, la description du contenu des fichiers multimédia associés aux objets.

L'objectif de l'invention est notamment de proposer un procédé permettant de décrire et de comparer des objets dans un contexte d'incertitude.

Pratiquement, l'invention vise par exemple à décrire et comparer des fichiers image, musicaux, vidéo ou d'autres formes.

Elle permet de répondre aux questions du type : je souhaite trouver des morceaux de musiques correspondant à « mes goûts ». Une telle opération pose deux problèmes. Le premier est de modéliser des notions comme « mes goûts » qui sont très subjectives. De nombreux travaux ont déjà traité ce problème dans le cas où l'objet bénéficie d'un contexte textuel. Nous nous intéressons notamment ici aux objets isolés sans contexte textuel. C'est la deuxième difficulté que nous proposons de résoudre, à savoir extraire d'un objet isolé des caractéristiques qui permettront de le décrire et de le soumettre à la comparaison, l'objectif étant d'en obtenir une caractérisation sémantique (e.g. sous forme de mots clés) en termes de probabilité.

Ces objectifs sont atteints dans le cadre de l'invention, grâce à un procédé de description automatique d'un objet multimédia inconnu, dans lequel on associe l'objet inconnu avec plusieurs types d'objets multimédia de référence selon à chaque fois une probabilité d'appartenance respective à chaque type considéré, le procédé incluant une étape consistant à mesurer au moins une caractéristique physique sur l'objet inconnu et à la comparer avec des mesures de caractéristiques représentant au mieux les types de référence, le procédé comprenant en outre l'étape consistant à utiliser pour chaque type au moins une relation probabiliste donnant une probabilité d'appartenance au type considéré en fonction du résultat de la comparaison des caractéristiques de l'objet inconnu et du type, le procédé comprenant en outre l'étape consistant à utiliser les probabilités d'appartenance aux différents types ainsi obtenues en combinaison avec une série de relations d'affinités entre types, de manière à élire des appartenances qui sont à la fois majoritaires en probabilité et qui se co-désignent par leur relation d'affinité, et de manière à exclure des appartenances ayant une moindre affinité avec les types élus.

On propose également selon l'invention un dispositif de description automatique d'un objet multimédia inconnu, comprenant des moyens pour associer l'objet inconnu avec plusieurs types d'objets multimédia de référence selon à chaque fois une probabilité d'appartenance respective au type considéré, le dispositif incluant des moyens pour mesurer au moins une caractéristique physique sur l'objet inconnu et la comparer avec des mesures représentant au mieux les types de référence, le dispositif comprenant en outre des moyens utilisant pour chaque type au moins une relation probabiliste donnant une probabilité d'appartenance au type considéré en fonction du résultat de la comparaison des caractéristiques de l'objet inconnu et du type, le dispositif comprenant en outre des moyens pour utiliser les probabilités d'appartenance aux différents types ainsi obtenues en combinaison avec une série de relations d'affinités entre types, de manière à élire des appartenances qui sont à la fois majoritaires en probabilité et qui se co-désignent par leur relation d'affinité, et de manière à exclure des appartenances ayant une moindre affinité avec les types élus.

D'autres caractéristiques, buts et avantages de l'invention apparaîtront à la lecture de la description détaillée qui va suivre, faite en référence aux figures annexées sur lesquelles :
- les figures 1a et 1b représentent schématiquement des modes d'association, le premier mode dans un plan dit « de types », le second mode en tant que mode à apprentissage,
- la figure 2 est un synoptique représentant différentes étapes mises en oeuvre dans une variante préférée de l'invention,
- la figure 3 est un tracé représentant un niveau de probabilité d'appartenance en fonction du niveau de pondération d'une caractéristique physique donnée,
- la figure 4 est un tracé représentant une approximation du tracé précédent,
- la figure 5 est un tracé représentant une probabilité d'appartenance en fonction d'une erreur mesurée sur des variables d'entrée,
- la figure 6 est un tracé du même type pour une erreur sur la variable de sortie,
- la figure 7 et la figure 8 sont chacune un tracé représentant une probabilité d'appartenance en fonction d'une erreur sur une caractéristique respective en entrée (étape 4 de la figure 2),
- la figure 9 est un tracé représentant une probabilité d'appartenance en fonction d'une moyenne d'erreurs mesurées sur deux caractéristiques.

La méthode employée est d'une grande adaptabilité. Trois aspects sont développés ci-après, qui sont les réseaux associatifs (liens sémantiques entre objets de références), la logique floue (gestion de l'incertitude) et une étape appelée ici « inférence corrélative » (limiter l'ambiguïté par croisement d'informations).

Contrairement à l'approche courante qui se place très en amont et cherche plutôt à optimiser la précision de la modélisation de l'image, plus généralement de l'objet, on se situe plus haut dans les couches. On prend le modèle de l'image (du son, etc.) brut même s'il est de mauvaise qualité et on cherche à réduire l'ambiguïté de l'interprétation grâce à des méthodes de gestion de l'incertitude (recoupement, logique floue).

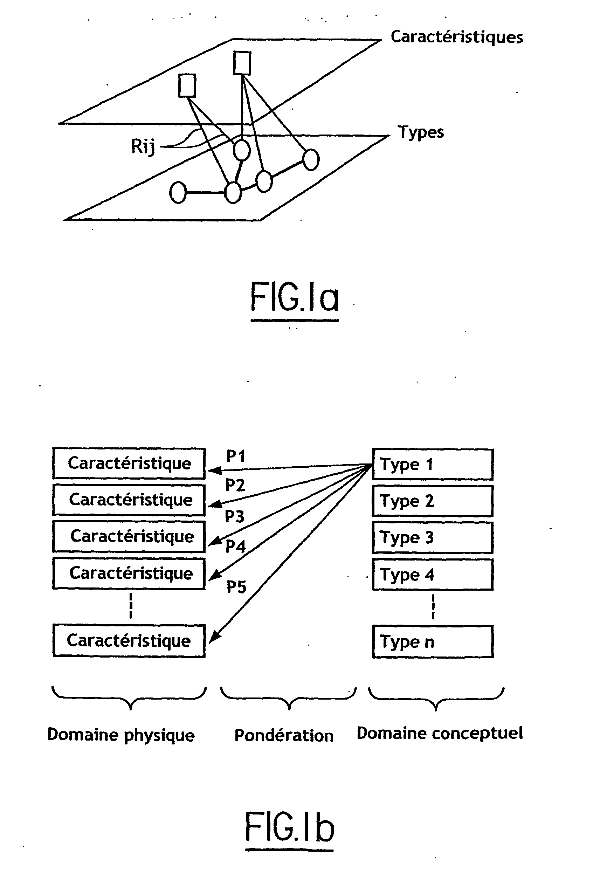

L'opération de description est préférentiellement réalisée en comparant des objets inconnus à des objets de caractéristiques connues et par croisement et aboutit à un vecteur de caractéristique associé à une probabilité d'appartenance. Ce vecteur traduit la relation entre des propriétés physiques ou logiques et des propriétés conceptuelles (voir fig. 1a, 1b).

La méthode décrite ci-après vise la caractérisation dans un contexte d'incertitude et s'applique à des objets quelle que soit leur nature (analogique, numérique, symbolique, etc.). Ceci étant dit, pour des raisons de clarté, nous restreignons les explications qui suivent aux fichiers de type multimédia (e.g. mp3, mpeg, wav, jpg, etc). Ces objets peuvent être par exemple décrits par certaines des propriétés physiques des objets analogiques sous jacents (fréquences, durée, formes typiques, etc.). Par ailleurs, ces mêmes objets peuvent être décrits dans le registre conceptuel par une typologie adéquate (musique pop, jazz, film d'action, photo de voiture) ou un type préféré sans qu'il soit référencé précisément (eg un mélange de jazz et de classique personnalisé). Un premier objectif est de mettre en oeuvre une correspondance associative entre le domaine physique et le domaine conceptuel.

Les figures 1a et 1b présentent deux modes d'associations. Le premier (figure 1 a) dans le plan des types est une association conceptuelle classique (par exemple entre des thèmes du lexique interconnectés par des relations pondérées en fonction de leurs proximités sémantique). Le second (figure 1b) est obtenu par apprentissage entre les types et les caractéristiques de références. Ce type d'architecture permet par recoupement d'identifier des relations conceptuelles entre caractéristiques physiques ou logiques.

Par exemple, les types peuvent être des mots, les caractéristiques peuvent être des formes dans le cas d'images.

Le choix des caractéristiques est à réaliser préférentiellement une fois pour toute pour un ensemble de types donnés mais requiert une expertise. Par exemple un musicien et un électronicien seront à même d'identifier les grandeurs représentatives de la typologie musicale (par exemple la fréquence moyenne des 10 premières secondes d'un morceau de musique permet d'identifier une musique d'ambiance d'un morceau de hard rock). Dans les exemples qui suivent nous n'utiliserons que des caractéristiques simplifiées pour décrire notre méthode.

Voici un premier exemple correspondant au cas de documents sonores, permettant de comprendre le principe.

Pour savoir si un fichier musical contient un morceau de flûte ou de cor (2 types conceptuels simples) il faut pouvoir accéder au signal sonore codé dans le fichier (e.g. wav, mp3).

Ceci est réalisé par des algorithmes de décodage classiques. Le signal sera analysé avec des outils de traitement du signal adéquats qui pourront déterminer sa fréquence (caractéristique physique simplifiée pour l'exemple). Si on considère des fichiers de référence (plusieurs fichiers du type cor, plusieurs fichiers du type flûte), on pourra déterminer leurs fréquence moyenne dans le cas du cor et dans le cas de la flûte. On pourra constater que la fréquence A+delta f est celle de la flûte et la fréquence B+ delta f celle du cor. Ces fréquences ainsi que les types associés seront le modèle de référence obtenu par une étude statistique sur un échantillon représentatif. En calculant la fréquence fi d'un certain nombre de fichiers contenant des sons d'instruments inconnus, on pourra déterminer leur appartenance à la catégorie flûte ou cor en fonction de la proximité (si fi-A < seuil alors i proche de flûte). Il est également envisagé que l'ensemble des fichiers de référence de type « cor » puisse contenir des fichiers ne contenant pas du cor. La fréquence moyenne contient alors intrinsèquement une marge d'erreur et sa proximité avec la fréquence d'un fichier à analyser est analysée de manière probable, également pour tenir compte du fait que le calcul de la moyenne est en fait le calcul d'une moyenne probable (espérance mathématique).

Cet exemple est très simplifié car un fichier sonore (c'est encore plus compliqué pour les fichiers vidéo) est le plus souvent une agrégation complexe de fréquences différentes dans le temps et dans l'espace.

Pour résoudre ce problème de complexité, on identifie préférentiellement un certain nombre de caractéristiques fréquentielles spatiales et temporelles (fixes et évolutives) qui seront à même de décrire en théorie n'importe quel signal. Voici un autre exemple plus précis d'une définition de telles caractéristiques. L'analyse spectrale du signal sur toute sa durée permet de récupérer le taux de fréquence hautes et basses. Nous ne considérons que 10 plages de fréquences (f1 à f10) réparties sur le spectre audible (20 Hz à 20 KHz) par exemple dfl=20 Hz-500 Hz, df2=500Hz-2 KHz, df3=2kHz-5KHz etc. Dans la pratique le découpage fréquentiel tiendra compte de la fréquence fondamentale des principaux instruments. Cette analyse peut être réalisée à différentes périodes du signal. Par exemple, nous calculons la distribution fréquentielle sur des espaces de dix secondes espacés toute les trente secondes sur un signal d'une durée de trois minutes. Les six ensembles de dix plages fréquentielles (que nous appellerons échantillons) seront considérés comme les caractéristiques physiques d'un signal du morceau de musique. Si comme dans l'exemple précédent on connaît un morceau de musique de référence « qui nous plaît » (sans forcément bien savoir le décrire sur le plan conceptuel - c'est peut être du jazz ou du blues, etc-). On peut calculer l'échantillon de référence et par la suite on peut appliquer à tout morceau de musique le calcul de l'échantillon que l'on comparera à l'échantillon de référence). En fonction de la proximité physique, on pourra déduire la proximité conceptuelle vis à vis de ce type « qui nous plaît ». Autrement dit, plus les caractéristiques spatiales, fréquentielles et temporelles du signal à classer et celles du signal de référence seront proches, plus on sera certain que le morceau à classer est un morceau de ce type « qui nous plaît ».

Dans le cas où on a défini plusieurs types de morceaux qui nous plaisent, on calcule la proximité des caractéristiques du morceau inconnu vis à vis des caractéristiques de chacun de ces types.

On obtient alors une série de probabilités d'appartenance du morceau inconnu pour chacun de ces types. Les types de morceaux qui nous plaisent ont eux-mêmes des compatibilités ou affinités. Ainsi, certains de ces types sont des types musicalement proches en termes de perception, tels que par exemple un type « rock » ou un type « hard-rock ».

D'autres types sont incompatibles tels qu'un type « musique de chambre » et un type « musique électronique ».

On utilise ce réseau d'affinités de perception de l'oreille entre les différents types, ainsi que les probabilités d'appartenance aux différents types, pour déduire une appartenance à une catégorie plus large regroupant une partie seulement de ces types qui nous plaisent. On choisit ici d'appeler cette étape une « inférence corrélative ».

Cette appartenance à une catégorie plus large finalise la description automatisée de l'objet multimédia au départ inconnu.

En d'autres termes, on utilise les probabilités d'appartenance aux différents types ainsi obtenues en combinaison avec une série de relations d'affinités entre types, affinités représentatives de la perception humaine, de manière à élire des appartenances qui sont à la fois majoritaires en probabilité et qui se co-désignent par leur relation d'affinité, et de manière à exclure des appartenances ayant une moindre affinité avec les types élus.

Les élections et exclusions dont on parle se concrétisent dans le cas présent par le fait d'identifier une partie seulement (une « catégorie » ici) des types qui nous plaisent.

De même, si l'on utilise plusieurs morceaux de références « qui nous plaisent » pour calculer les caractéristiques moyennes, on réalise un apprentissage des caractéristiques de références. Ces caractéristiques de référence sont une moyenne pouvant intégrer des morceaux donnés par erreur et donc cette moyenne est une référence « la plus probable », et la proximité d'un morceau considéré vis à vis de ces caractéristiques, est utilisée pour donner une « probabilité » que ce morceau nous plaise. Plus le morceau est proche de la référence statistique, plus la probabilité qu'il nous plaise est grande. La meilleure probabilité qu'il nous plaise correspond à une totale similitude entre caractéristiques du morceau considéré et moyenne statistique des caractéristiques de morceaux de référence.

Dans le cas de documents visuels (image et vidéo), la caractérisation des documents visuels est préférentiellement basée sur le même principe que celui des documents sonores. Il s'agit de mesurer la proximité avec d'autres objets selon des caractéristiques simples. Une image est analysée pour identifier par une recherche de contours les formes complexes isolées ainsi que leurs caractéristiques chromatiques (moyenne, écart type sur la forme). Ces opérations sont classiques dans l'art du traitement d'images.

Comme décrit précédemment, on associe un ensemble de types conceptuels à un ensemble de caractéristiques physiques. Ces types conceptuels sont par exemple : maison, animal, fleur, etc. Les caractéristiques physiques correspondent aux formes simples et à leurs descriptions chromatiques.

L'étape suivante consiste à rechercher les proximités entre des formes inconnues et des formes « statistiquement » connues (voir plus loin) ou une moyenne formant une « meilleure probabilité » qu'une image nous plaise. Ici, les types conceptuels sont ceux inhérents aux images fixes (on adapte cet ensemble dans le cas des vidéos: action, sport,etc..... information de type dynamique). Comme dans le cas de données sonores, la vidéo est considérée comme un échantillonnage de plusieurs images étant traité isolément puis contribuant à une caractérisation statistique du film.

On prend ici en compte une incertitude et une ambiguïté des analyses. Les êtres vivants prennent leurs décisions dans un contexte d'incertitude, en terme de probabilité. Même des décisions qui peuvent nous apparaître comme évidentes, répondent à ce principe.

Lorsque nous apercevons une personne au loin, notre cerveau mobilise ses fonctions cognitives pour comparer ce que nous percevons à un ensemble de caractéristiques de base que nous avons mémorisé dans le passé. Ces opérations nous amènent à tirer la conclusion que la personne en question est probablement un ami. Lorsque nous voyons cette personne de plus près, son identité nous apparaît comme évidente pourtant, les mêmes mécanismes que précédemment nous ont amené à une réponse tout aussi probabiliste. La différence, c'est que dans le second cas, la probabilité est beaucoup plus importante.

On va décrire maintenant deux mécanismes utilisés dans l'exemple préféré de réalisation de l'invention.

Le premier est le traitement et la composition (le calcul) de prémisses approximatives (peut être que, il y a des chances, etc.) La logique floue donne un certain nombre d'outils permettant de calculer avec des éléments incertains. L'autre mécanisme est basé sur le croisement d'information. Par exemple, si l'analyse d'une image révèle une forme proche à 75% d'un camion, à 75% d'une maison, à 60% d'un bus et à 10% d'un chalet, on considérera que la forme est un véhicule car sémantiquement la catégorie véhicule (camion et bus) est plus « co-désignée » que la catégorie habitation (chalet et maison). C'est un exemple particulier de ce que l'on appelle ici l'inférence corrélative. Ceci est possible car les types conceptuels possèdent leur propre réseau d'association correspondant aux caractéristiques linguistiques (arbre, fleur et végétal sont associés mais de manière différente). Au départ, la recherche des caractéristiques et le travail de rapprochement entre ces caractéristiques et les types conceptuels se fait sans tenir compte du niveau d'association interne entre les types conceptuels. Cette association sera utilisée pour lever certaines ambiguïtés sur les associations physiques/conceptuels.

Là encore, les recoupements sémantiques reflètent des affinités entre les différents types, affinités qui sont prises en considération en commun avec les probabilités d'appartenance à chacun de ces types, et permettent d'établir l'appartenance ou non à une catégorie.

En d'autres termes, pour identifier dans cet exemple une catégorie générale d'appartenance, on utilise les probabilités d'appartenance aux différents types ainsi obtenues en combinaison avec une série de relations d'affinités entre types, affinités représentatives de la perception humaine, de manière à élire des appartenances qui sont à la fois majoritaires en probabilité et qui se co-désignent par leur relation d'affinité, et de manière à exclure des appartenances ayant une moindre affinité avec les types élus.

Pour l'établissement des relations d'affinités utilisées dans cette deuxième étape ici appelée « étape d'inférence corrélative », on met ici en oeuvre un traitement préliminaire d'une multitude de textes, dans lequel on relève les occurrences particulièrement fréquentes de deux termes à chaque fois en position de proximité dans ces textes. Ainsi, la relation sémantique entre « maison » et « chalet » est identifiée simplement par la présence fréquente de ces deux termes proches l'un de l'autre dans une série de textes.

A contrario, le fait que les termes « camion » et « chalet » ne soient pratiquement jamais présents et proches l'un de l'autre, permet d'identifier qu'aucun lien de proximité sémantique (affinité) n'existe entre ces mots.

L'existence d'une affinité est par exemple décelée en fonction du dépassement d'un seuil de fréquence dans les textes de deux mots à proximité l'un de l'autre (à proximité car seulement distants d'un nombre de mots prédéfinis).

Un tel traitement préalable d'une série de textes permet d'automatiser l'établissement d'affinités entre types. De telles affinités sont bien représentatives de la perception humaine en ce qu'elles correspondent au sentiment d'affinité entre types que peut ressentir une personne, que ce soit l'affinité entre « rock » et « hard-rock » pour la musique, ou l'affinité entre «maison » et « chalet » pour des images.

Bien entendu, dans d'autres modes de réalisation, le traitement préalable d'une série d'objets descriptifs ou d'une série d'objets existants permet de la même façon d'identifier des affinités typiques car statistiquement très représentées comme définissant une relation sémantique entre deux termes ou deux caractéristiques.

Les élections et exclusions de types consistent simplement ici à identifier une partie d'entre eux signalant ensemble la catégorie générale d'appartenance de l'objet.

La constitution du réseau associatif (figure 1a, plan du bas) est réalisée ici par apprentissage, comme on vient de le décrire à partir de l'exploitation d'une série de textes, dans l'exemple en présence. Maintenant, il s'agit d'identifier les caractéristiques statistiques de la relation entre entrée (physique, plan du haut) et sortie (conceptuel, plan du bas). Ces caractéristiques seront utilisées pour alimenter le modèle flou. Si on considère un ensemble de z relations R entre chacun des p types de référence et une ou plusieurs des n caractéristiques, chaque relation Rij contient la représentation statistique de l'ensemble des exemples de cette relation fournis par les objets de référence. La relation contient la moyenne, l'écart moyen, min, max, n, etc. Par exemple, sur cent objets de référence la caractéristique i du type j est présente soixante fois la moyenne de la relation Rij est à 0.6.

Pour plus de clarté, nous allons donner maintenant un exemple d'application d'une prise de décision à partir d'une approche floue. La reconnaissance de contenu d'image est ici l'exemple d'application.

L'objectif est d'implémenter dans un réseau associatif des relations entre des formes et un type par exemple le type voiture. Nous nous limitons dans le cadre de cet exemple mais dans la pratique on peut prendre plus de caractéristiques que la forme et plus de type que le simple type voiture.

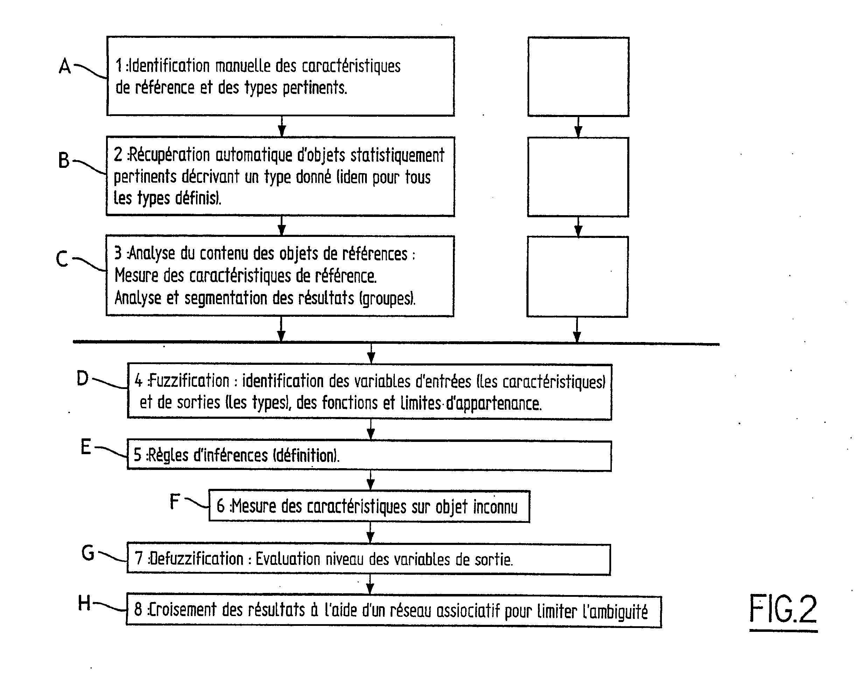

Sur la figure 2, l'étape A correspond à une identification manuelle des caractéristiques de références (e.g. formes, spectre moyen sur les 10 premières secondes d'un morceau de musique) et des types pertinents (travail d'expert).

L'étape B est une récupération automatique (moteur de recherche et aspirateur Web-Internet) d'objets (par exemple image de voiture) statistiquement pertinents décrivant un type donné (idem pour tous les types définis) à partir de mots clés (voiture, automobile, etc).

L'étape C est une étape d'analyse du contenu des objets de références : mesure des caractéristiques de référence, analyse et segmentation des résultats (groupes). On utilise une technique de catégorisation classique pour l'identification des groupes.

Ces trois étapes sont réalisées pour plusieurs types de références reliés par un réseau associatif. Cette approche permettra dans une étape ultérieure (Etape H), par recoupement, de régler certaines ambiguïtés.

L'étape D correspond à une fuzzification, c'est-à-dire une identification des variables d'entrée (les caractéristiques) et de sortie (les types), des fonctions et limites d'appartenance, les informations issues des étapes précédentes permettant d'automatiser cette étape.

L'étape E correspond à une étape de définition des règles d'inférences. Ces règles sont génériques et correspondent à une composition homogène de fonctions AND/OR liant les entrées aux sorties.

L'étape F est une étape de mesure des caractéristiques sur l'objet inconnu.

L'étape G est une étape de défuzzification : évaluation du niveau des variables de sortie. Cette étape présentée ici au sens global correspond à la défuzzification de chacune des sorties. Le résultat se présente sous la forme d'une probabilité d'appartenance de l'objet inconnu à chaque type.

L'étape H est une étape de croisement des résultats à l'aide d'un réseau associatif pour limiter l'ambiguïté (e.g. si l'objet est 50% un arbre, 50% une voiture et 50% un camion alors ce n'est certainement pas un arbre).

On va décrire maintenant, de manière plus détaillée, ce synoptique de la figure 2, dans une première étape de définition de références (étapes A à C sur la figure 2), on récupère un nombre important d'images contenant des voitures et on identifie les contours des formes à l'aide d'outils logiciels classiques. Ces formes sont normalisées (ramenées à des proportions identiques) et comparées (repère cartésien) de manière à identifier des groupes homogènes (contour superposable avec erreur minimale). Pour chacun de ces groupes on identifie la forme moyenne, dite de référence (qui peut être une image quelconque du groupe, puisque la segmentation - étape C - assure que les membres d'un groupe ont une forte similitude) et le nombre de candidats par groupe. On pose que les formes de références regroupant le plus de candidats décrivent le mieux de type de référence (voiture). On identifie le nombre optimal de groupes avec des techniques classiques de clustering. Par exemple, on optimise le rapport entre erreur moyenne intra groupes et inter groupes. L'algorithme de clustering est alimenté par la matrice des erreurs forme à forme.

On suppose pour la suite de l'exemple que le nombre de groupes idéal est deux. On dispose donc de deux formes moyennes dont chacune affectée à une probabilité de similitude fonction du % de forme dans le groupe par rapport au nombre total de formes.

Contrairement à la logique binaire (une proposition est vraie ou fausse), la logique floue prend en compte le caractère « possible » d'une proposition en y associant un certain niveau de vraisemblance. En plus d'un concept, la logique floue introduit des méthodes et une algèbre adaptée permettant de manipuler des grandeurs floues (approximatives).

La première étape (étape D sur la figure 2) dite de quantification floue (ou «fuzzification») consiste à modéliser chaque entrée du système par des courbes donnant le degré d'appartenance aux différents états du système possiblement associé à ces entrées. Dans notre cas, les entrées sont les caractéristiques physiques et les états sont les types (ou associations de types) conceptuels. Le système étant le réseau d'association (pondération normalisée) existant entre les entrées et les sorties (voir figure 1a).

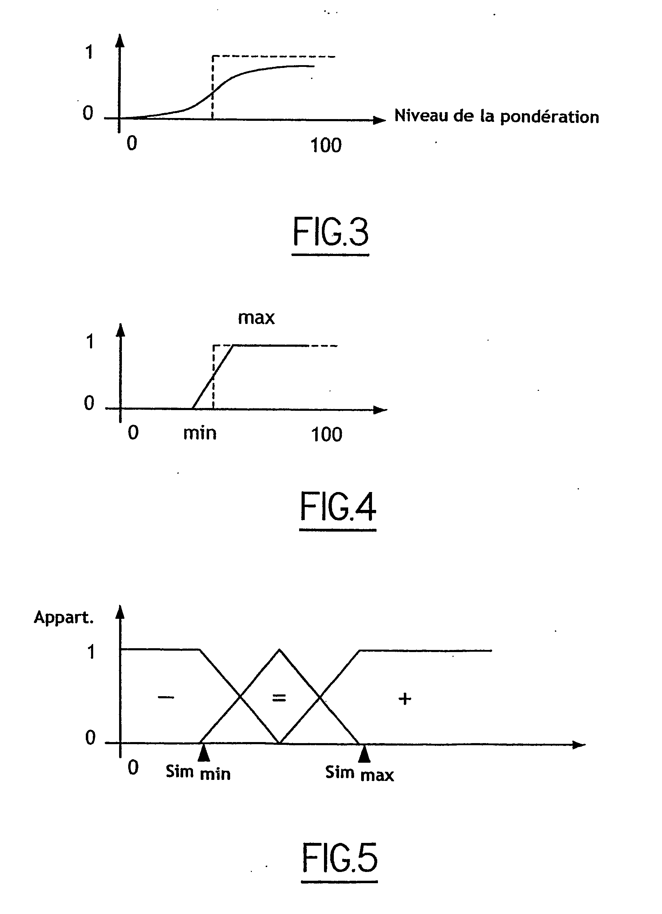

Ainsi, chaque entrée, en fonction de son niveau de pondération sera représentée sur une courbe de type sigmoïde (figure 3 ou approximé figure 4) qui explicitera son niveau d'appartenance à un type donné.

Soit par exemple un réseau (figure 1) où le niveau de pondération maximal (normalisé) est de 100. Une caractéristique physique qui sera reliée à un type conceptuel avec une pondération de 10 sera considérée comme la décrivant peu probablement. Au contraire, une pondération de 80 sera considérée comme une description très pertinente.

Dans la figure 4, les valeurs min et max obtenues par analyse statistique, fournissent les seuils au-delà desquels la caractéristique est considérée ne plus décrire du tout de type (min) ou très bien le décrire (max).

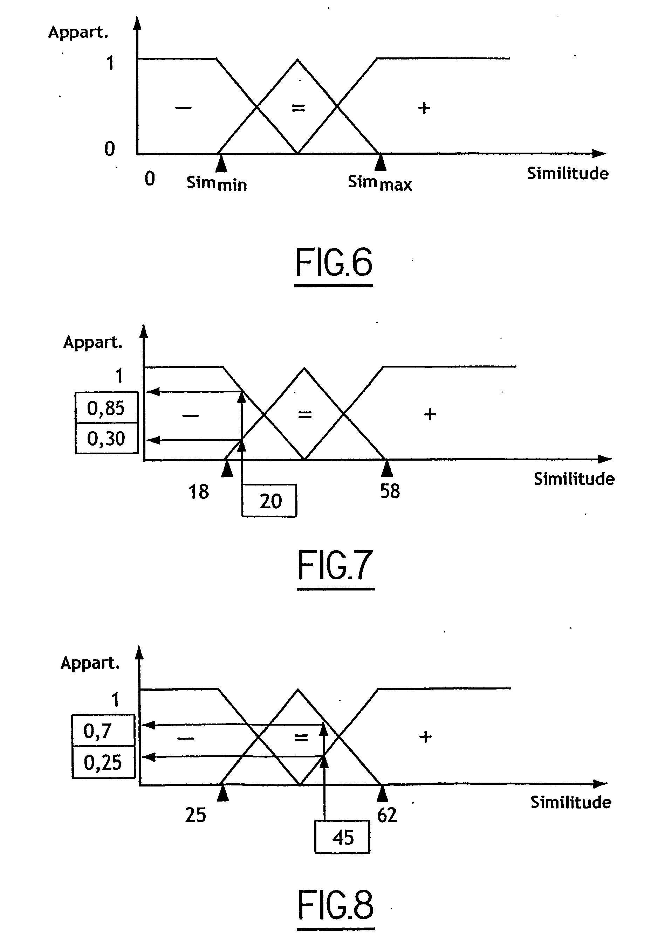

La fonction d'appartenance représentée figure 5 établit le niveau d'appartenance à chaque sous-ensemble flou en fonction du niveau de l'erreur entre les formes de référence (les deux formes moyennes) et les formes contenues dans l'image à analyser.

Sur la figure 5, le symbole « - » représente une appartenance peu probable. Le symbole « = » représente une appartenance possible. Le symbole « + » représente une appartenance très probable.

Sim ₘᵢₙ et Simₘₐₓ désignent respectivement la similitude minimale et maximale calculées forme à forme dans chaque groupe lors de l'apprentissage. Sim ₘₐₓ est la similitude entre les deux formes les plus semblables et Simₘᵢₙ la similitude entre les deux formes les plus différentes au sein d'un groupe donné.

D'une manière similaire, on définit la fonction d'appartenance pour la variable de sortie (figure 6).

Les valeurs Sim ₘᵢₙ et Sim ₘₐₓ décrivent ici l'incertitude minimale et maximale pour la prise de décision. On dira qu'au dessous de Sim ₘᵢₙ la forme n'appartient pas au type, et qu'au dessus de Sim ₘₐₓ, elle appartient au type et qu'entre ces deux valeurs elle appartient au type avec un certain niveau de probabilité. Par exemple, je peux considérer qu'en dessous de 20% de certitude la personne que je vois au loin n'est pas la personne que j'imagine, alors qu'au-dessus de 75%, j'estime que c'est la personne en question.

Les règles d'inférence (étapes E et F sur la figure 2 : définition des règles d'inférence et mesure), impliquent une suite d'opérations logiques et des conditions liant les entrées et la sortie que l'on peut adapter plus ou moins finement selon les cas à traiter. Le tableau suivant indique les modes de composition liant les deux groupes pour prendre la décision d'appartenance ou pas au type de référence. Il faut rappeler ici que les deux groupes, obtenus par segmentation (étape C) sont des groupes dissimilaires. Une appartenance aux deux groupes ne permet donc pas de lever l'ambiguïté concernant l'appartenance au type. C'est pour cette raison que l'on affecte un - dans le tableau lorsque E1 et E2 sont à +.

Les règles d'inférence entre les entrées (le niveau d'appartenance au groupe 1 ou 2) et la sortie (niveau de certitude qu'il s'agit d'une voiture) sont les suivantes. Les deux entrées étant reliées à la sortie par une fonction OR (c'est à dire le maximum des deux valeurs en logique floue) dans le cas des faibles probabilités et de la fonction AND pour les fortes.

**Table 1 : inférences liant les entrées à la sortie**

| | | | |
|---|---|---|---|
| E1/E2 | - | = | + |
| - | - | - | = |
| = | - | = | + |
| + | = | + | - |

Ce tableau s'interprète comme suit :
Si (E1+ et E2+) ou (E1- et E2-) ou (E1- et E2=) ou (E1= et E2-) alors S-

(Si la ressemblance à la forme 1 et à la forme 2 est faible ou que la ressemblance est faible à la forme 1 et médiocre à la forme 2 ou que la ressemblance est médiocre à la forme 1 et faible à la forme 2 alors la forme inconnue est peu probablement une voiture.
Si (E1= et E2=) ou (E1+ et E2-) ou (E1- et E2+) alors S=
SI (E1+ et E2=) ou (E1= et E2+) alors S+

On donne ici maintenant un exemple d'algorithme de composition des règles d'inférences pour un nombre de groupes quelconques.

Chaque caractéristique peut prendre trois états (+, -, =) soit, pour n caractéristiques, 3ⁿ combinaisons possibles.

Dans cette étape, on initialise les valeurs S+ ; S- ; et S = à 0.

Pour chacune des 3ⁿ combinaisons :
- on identifie le signe et la valeur des éléments de la combinaison ;
- on calcule Min comme étant le minimum de tous les éléments de la combinaison.
- dans chaque combinaison, on compte le nombre + et le nombre -.

Les résultats sont alors exploités de la manière suivante :
- si le nombre d'éléments « + » est inférieur à 30% du nombre d'éléments de la combinaison et au moins égal à 1 élément (on prend la valeur entière la plus proche des 30% (ex : si 0,7 alors on prend 1), alors, si Min est supérieur à la valeur S+, la valeur S+ est définie comme étant égale à Min ;
- si le nombre d'éléments est supérieur à 70 %, alors, si Min est supérieur à la valeur S =, la valeur de S = est définie comme étant égale à min ;
- si le nombre d'éléments est compris entre 30 et 70%, alors, si Min est supérieur à la valeur S =, la valeur S = est définie comme étant égale à Min)

La sortie de ce système (étapes G et H : defuzzification et croisement) est de la forme : l'objet correspond (par exemple) à 80% au type T1, à 65% au type T2, etc. Dans notre exemple, nous nous sommes limités à un seul type T1=voiture.

La defuzzification consiste à évaluer la grandeur de sortie (ici la probabilité d'appartenance à un type donné). Ceci est réalisé en projetant l'état des variables d'entrées sur les variables de sortie au travers des règles d'inférence. Pratiquement, on réduit (décapite) les fonctions d'appartenance des variables de sortie suivant les résultats fournis par les opérations logiques (floues) dictées par les règles d'inférences. Le paragraphe suivant donne un exemple illustré de cette opération.

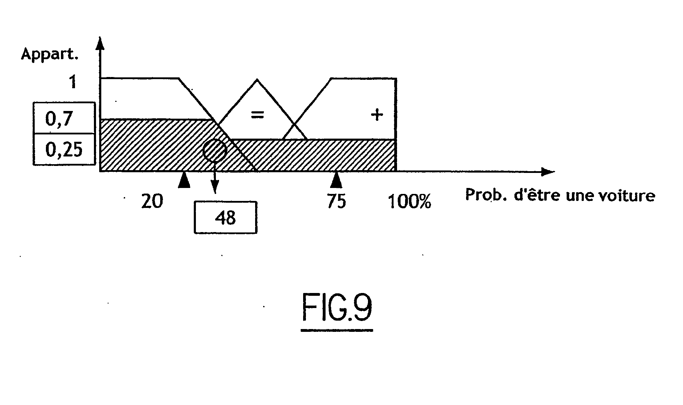

On donne maintenant un exemple d'application. On considère qu'après la phase d'apprentissage, chaque groupe a les caractéristiques suivantes (figures 7 et 8) :

| Similitude /groupe | 1 | 2 |
|---|---|---|
| Similitude -min % | 18 | 25 |
| Similitude -max % | 58 | 62 |

On considère qu'une image possède une forme qui après comparaison avec les deux formes de références a les erreurs suivantes :

| Similitude /groupe | 1 | 2 |
|---|---|---|
| Sim | 20 | 45 |

Si (E1+ et E2+) ou (E1- et E2-) ou (E1- et E2=) ou (E1= et E2-) alors S-
S-= Max [Min (0, 0.25), Min(0.85,0), Min(0.85,0.7), Min(0.3,0] = 0.7
Si (E1= et E2=) ou (E1+ et E2-) ou (E1- et E2+) alors S=
S==Max[Min(0.3,0.25), Min(0,0), Min(0.85,0.25)]=0.25
Si (E1+ et E2+) (E1+ et E2=) ou (E1= et E2+) alors S+
S+=Max [Min(0,0.7), Min(0.3, 0.25)]=0.25

Le résultat 48 correspond au centre de gravité des trois ensembles (-, +, =) de la sortie réduit respectivement à 0.7,0.25,0.25 (surface hachurée, figure 9)

La réponse est donc : « c'est une voiture à 48% ». Puisque dans notre exemple, nous nous sommes limités à un seul type, nous ne pouvons pas faire de croisements.

Dans la réalité, on met en oeuvre en plus l'étape consistant à utiliser les probabilités d'appartenance aux différents types ainsi obtenues en combinaison avec une série de relations d'affinités entre types, affinités représentatives de la perception humaine, de manière à élire des appartenances qui sont à la fois majoritaires en probabilité et qui se co-désignent par leur relation d'affinité, et de manière à exclure des appartenances ayant une moindre affinité avec les types élus.

Cette étape, en combinaison avec les étapes précédentes, permet de multiplier notablement la précision de l'analyse. Globalement, cette méthode est intéressante car elle offre une loi de composition pour des entrées floues ce qui est d'autant plus difficile à gérer qu'il y a de nombreuses entrées.

## Revendications

1. Procédé de description automatique d'un objet multimédia inconnu, dans lequel on associe l'objet inconnu avec plusieurs types d'objets multimédia de référence selon à chaque fois une probabilité d'appartenance respective à chaque type considéré (G), le procédé incluant une étape consistant à mesurer au moins une caractéristique physique sur l'objet inconnu (F) et à la comparer avec des mesures de caractéristiques représentant au mieux les types de référence, le procédé comprenant en outre l'étape (H) consistant à utiliser pour chaque type au moins une relation probabiliste donnant une probabilité d'appartenance au type considéré en fonction du résultat de la comparaison des caractéristiques de l'objet inconnu et du type, le procédé comprenant en outre l'étape consistant à utiliser les probabilités d'appartenance aux différents types ainsi obtenues en combinaison avec une série de relations d'affinités entre types, de manière à élire des appartenances qui sont à la fois majoritaires en probabilité et qui se co-désignent par leur relation d'affinité, et de manière à exclure des appartenances ayant une moindre affinité avec les types élus.

2. Procédé de description selon la revendication 1, **caractérisé en ce qu'**il comporte l'étape préliminaire consistant à définir les caractéristiques de référence d'un type à partir d'un groupe d'objets multimédia sensés représenter ce type (B), en réalisant une mesure d'une caractéristique physique sur l'ensemble de ce groupe, et en tirant de cette série de mesures une ou des valeur(s) de référence pour cette caractéristique, valeur(s) de référence qui est(sont) ensuite utilisée(s) pour définir la relation de probabilité d'appartenance au type en tant que valeur à laquelle on compare une mesure sur un objet inconnu pour déduire la probabilité d'appartenance au type.

3. Procédé selon la revendication 2, **caractérisé en ce que** le groupe d'objets multimédia est fourni à l'aide d'une étape de recherche automatique dans un système d'information avec un aspirateur internet et un moteur de recherche internet.

4. Procédé selon l'une quelconque des revendications précédentes, **caractérisé en ce qu'**il comporte l'étape préliminaire consistant à mesurer sur un ensemble d'objets descriptifs une fréquence d'occurrence simultanée des types dans ces objets et en déduire l'existence d'une affinité entre au moins deux types lorsque ceux-ci ont une occurrence simultanée particulière.

5. Procédé de description selon l'une quelconque des revendications précédentes, **caractérisé en ce qu'**il comporte l'étape consistant à effectuer une reconnaissance de forme sur l'objet multimédia inconnu (F), au moins une forme de référence à reconnaître sur l'objet inconnu constituant une caractéristique physique appartenant à la définition d'un des types.

6. Procédé selon la revendication 5, **caractérisé en ce que** la reconnaissance de forme comprend une mesure de similitude entre une forme prélevée sur l'objet et la forme de référence, et comprend également l'utilisation d'une relation prédéfinie qui donne une probabilité d'appartenance (G) au type en fonction de la mesure de similitude de forme effectuée.

7. Procédé selon l'une quelconque des revendications précédentes, **caractérisé en ce qu'**au moins un type inclut plusieurs caractéristiques de référence (E1, E2), **en ce qu'**on réalise au moins deux mesures sur l'objet inconnu pour établir une mesure de proximité avec chacune des deux caractéristiques de référence, et **en ce que** l'on établit la probabilité d'appartenance à ce type en utilisant au moins deux relations, chacune donnant une probabilité d'appartenance au type en fonction de la proximité à une caractéristique différente, et **en ce que** les deux relations de probabilité sont utilisées pour établir un résultat global de probabilité d'appartenance de l'objet au type considéré.

8. Procédé selon la revendication précédente, **caractérisé en ce que** les au moins deux relations de probabilité d'appartenance au type sont exploitées selon une technique combinatoire de logique floue pour fournir le résultat de probabilité d'appartenance de l'objet au type considéré.

9. Procédé selon l'une quelconque des revendications précédentes, **caractérisé en ce qu'**on met en oeuvre une technique de logique floue qui consiste en un mécanisme donnant un seul niveau de probabilité d'appartenance à un type de référence à partir d'une combinaison de probabilités de similitude aux différentes caractéristiques du type de référence.

10. Dispositif de description automatique d'un objet multimédia inconnu, comprenant des moyens pour associer l'objet inconnu avec plusieurs types d'objets multimédia de référence selon à chaque fois une probabilité d'appartenance respective au type considéré (G), le dispositif incluant des moyens pour mesurer au moins une caractéristique physique sur l'objet inconnu (F) et la comparer avec des mesures représentant au mieux les types de référence, le dispositif comprenant en outre des moyens utilisant pour chaque type au moins une relation probabiliste donnant une probabilité d'appartenance au type considéré en fonction du résultat de la comparaison des caractéristiques de l'objet inconnu et du type, le dispositif comprenant en outre des moyens pour utiliser les probabilités d'appartenance aux différents types ainsi obtenues en combinaison avec une série de relations d'affinités entre types, de manière à élire (H) des appartenances qui sont à la fois majoritaires en probabilité et qui se co-désignent par leur relation d'affinité, et de manière à exclure des appartenances ayant une moindre affinité avec les types élus.

11. Dispositif selon la revendication 10, **caractérisé en ce qu'**il inclut des moyens de traitement pour exploiter plusieurs groupes d'objets multimédia de référence (B, C), chaque groupe représentant au mieux son type correspondant, ces moyens de traitement étant en outre prévus pour réaliser au moins une mesure d'une caractéristique physique sur l'ensemble d'un groupe considéré, et en tirer une mesure de référence de cette caractéristique, cette mesure de référence étant ensuite utilisée dans la définition de la relation donnant une probabilité d'appartenance au type considéré, en tant que mesure à laquelle le dispositif compare une mesure sur un objet inconnu pour déduire la probabilité d'appartenance au type considéré (G).

12. Dispositif selon la revendication 10 ou la revendication 11, **caractérisé en ce qu'**il inclut des moyens pour mettre en oeuvre une étape préliminaire consistant à mesurer sur un ensemble d'objets descriptifs une fréquence d'occurrence des types dans ces objets, et en déduire l'existence d'une affinité entre au moins deux types lorsque ceux-ci ont une occurrence simultanée particulière.

## Claims

1. Method of automatic description of an unknown multimedia object, in which the unknown object is associated with several types of reference multimedia objects according each time to a membership probability of belonging respectively to each type considered (G), the method including a step consisting in measuring at least one physical characteristic on the unknown object (F) and in comparing said characteristic with measurements of characteristics best representing the reference types, the method furthermore comprising the step (H) consisting in using for each type at least one probabilistic relation giving a membership probability of belonging to the type considered as a function of the result of the comparison of the characteristics of the unknown object and of the type, the method furthermore comprising the step consisting in using the membership probabilities thus obtained of belonging to the various types in combination with a series of relations of affinities between types, in such a way as to elect memberships which are both predominant probability-wise and which together stand out through their affinity relation, and in such a way as to exclude memberships having a lesser affinity with the types elected.

2. Method of description according to Claim 1, **characterized in that** it comprises the preliminary step consisting in defining the reference characteristics of a type on the basis of a group of multimedia objects supposedly representing this type (B), by carrying out a measurement of a physical characteristic on the whole of this group, and by deriving from this series of measurements one or more reference value(s) for this characteristic, which reference value(s) is(are) then used to define the membership probability relation of belonging to the type in the guise of value with which a measurement on an unknown object is compared so as to deduce the probability of belonging to the type.

3. Method according to Claim 2, **characterized in that** the group of multimedia objects is provided with the aid of a step of automatic searching within an information system with an Internet spider and an Internet search engine.

4. Method according to any one of the preceding claims, **characterized in that** it comprises the preliminary step consisting in measuring on a set of descriptive objects a frequency of simultaneous occurrence of the types in these objects and deducing therefrom the existence of an affinity between at least two types when the latter have a particular simultaneous occurrence.

5. Method of description according to any one of the preceding claims, **characterized in that** it comprises the step consisting in performing a shape recognition on the unknown multimedia object (F), at least one reference shape to be recognized on the unknown object constituting a physical characteristic belonging to the definition of one of the types.

6. Method according to Claim 5, **characterized in that** the shape recognition comprises a measurement of similitude between a shape gleaned from the object and the reference shape, and also comprising the use of a predefined relation which gives a membership probability (G) of belonging to the type as a function of the measurement of similitude of shape performed.

7. Method according to any one of the preceding claims, **characterized in that** at least one type includes several reference characteristics (E1, E2), **in that** at least two measurements are carried out on the unknown object to establish a measurement of proximity with each of the two reference characteristics, and **in that** the probability of belonging to this type is established using at least two relations, each giving a probability of belonging to the type as a function of the proximity to a different characteristic, and **in that** the two probability relations are used to establish an overall result of probability of the object belonging to the type considered.

8. Method according to the preceding claim, **characterized in that** the at least two relations of probability of belonging to the type are utilized according to a fuzzy logic combinatorial technique to provide the result of probability of the object belonging to the type considered.

9. Method according to any one of the preceding claims, **characterized in that** a fuzzy logic technique is implemented which consists of a mechanism giving a single level of probability of belonging to a reference type on the basis of a combination of probabilities of similitude to the various characteristics of the reference type.

10. Device for automatic description of an unknown multimedia object, comprising means for associating the unknown object with several types of reference multimedia objects according each time to a membership probability of belonging respectively to the type considered (G), the device including means for measuring at least one physical characteristic on the unknown object (F) and for comparing said characteristic with measurements best representing the reference types, the device furthermore comprising means using for each type at least one probabilistic relation giving a membership probability of belonging to the type considered as a function of the result of the comparison of the characteristics of the unknown object and of the type, the device furthermore comprising means for using the membership probabilities thus obtained of belonging to the various types in combination with a series of relations of affinities between types, in such a way as to elect (H) memberships which are both predominant probability-wise and which together stand out through their affinity relation, and in such a way as to exclude memberships having a lesser affinity with the types elected.

11. Device according to Claim 10, **characterized in that** it includes processing means for utilizing several groups of reference multimedia objects (B, C), each group best representing its corresponding type, these processing means furthermore being designed to carry out at least one measurement of a physical characteristic on the whole of a group considered, and to derive therefrom a reference measurement of this characteristic, this reference measurement then being used in the definition of the relation giving a probability of belonging to the type considered, in the guise of measurement with which the device compares a measurement on an unknown object so as to deduce the probability of belonging to the type considered (G).

12. Device according to Claim 10 or Claim 11, **characterized in that** it includes means for implementing a preliminary step consisting in measuring on a set of descriptive objects a frequency of simultaneous occurrence of the types in these objects and deducing therefrom the existence of an affinity between at least two types when the latter have a particular simultaneous occurrence.

## Patentansprüche

1. Verfahren zur automatischen Beschreibung eines unbekannten Multimedia-Gegenstands, bei dem der unbekannte Gegenstand mehreren Typen von Bezugs-Multimedia-Gegenständen zugeordnet wird, jedes Mal gemäß einer Wahrscheinlichkeit der Zugehörigkeit zu jedem betrachteten Typ (G), wobei das Verfahren einen Schritt enthält, der darin besteht, zumindest eine physikalische Eigenschaft am unbekannten Gegenstand (F) zu messen und sie mit Maßen von Eigenschaften zu vergleichen, die die Bezugstypen bestmöglich repräsentieren, wobei das Verfahren außerdem den Schritt (H) aufweist, für jeden Typ mindestens eine Wahrscheinlichkeitsbeziehung zu verwenden, die eine Wahrscheinlichkeit der Zugehörigkeit zum betrachteten Typ in Abhängigkeit vom Ergebnis des Vergleichs der Eigenschaften des unbekannten Gegenstands und des Typs ergibt, wobei das Verfahren außerdem den Schritt aufweist, die so erhaltenen Wahrscheinlichkeiten der Zugehörigkeit zu den verschiedenen Typen in Kombination mit einer Reihe von Affinitätsbeziehungen zwischen Typen zu verwenden, um Zugehörigkeiten auszuwählen, deren Wahrscheinlichkeiten am größten sind und die sich durch ihre Affinitätsbeziehung gemeinsam bezeichnen, und um Zugehörigkeiten auszuschließen, die eine geringere Affinität zu den ausgewählten Typen haben.

2. Beschreibungsverfahren nach Anspruch 1, **dadurch gekennzeichnet, dass** es den einleitenden Schritt aufweist, die Bezugseigenschaften eines Typs ausgehend von einer Gruppe von Multimedia-Gegenständen zu definieren, von denen angenommen wird, dass sie diesen Typ (B) repräsentieren, indem eine Messung einer physikalischen Eigenschaft bei dieser ganzen Gruppe durchgeführt wird und indem aus dieser Reihe von Messungen mindestens ein Bezugswert für diese Eigenschaft gewonnen wird, der anschließend verwendet wird, um die Wahrscheinlichkeitsbeziehung der Zugehörigkeit zum Typ als Wert zu definieren, mit dem eine Messung an einem unbekannten Gegenstand verglichen wird, um die Wahrscheinlichkeit der Zugehörigkeit zum Typ abzuleiten.

3. Verfahren nach Anspruch 2, **dadurch gekennzeichnet, dass** die Gruppe von Multimedia-Gegenständen mit Hilfe eines Schritts der automatischen Recherche in einem Informationssystem mit einem Internet-Sauger und mit einer Internet-Suchmaschine geliefert wird.

4. Verfahren nach einem der vorhergehenden Ansprüche, **dadurch gekennzeichnet, dass** es den einleitenden Schritt aufweist, an einer Einheit von beschreibenden Gegenständen eine Häufigkeit des gleichzeitigen Vorkommens der Typen in diesen Gegenständen zu messen und daraus die Existenz einer Affinität zwischen mindestens zwei Typen abzuleiten, wenn diese ein besonderes gleichzeitiges Vorkommen haben.

5. Beschreibungsverfahren nach einem der vorhergehenden Ansprüche, **dadurch gekennzeichnet, dass** es den Schritt aufweist, eine Formerkennung am unbekannten Multimedia-Gegenstand (F) durchzuführen, wobei mindestens eine am unbekannten Gegenstand zu erkennende Bezugsform eine physikalische Eigenschaft bildet, die zur Definition eines der Typen gehört.

6. Verfahren nach Anspruch 5, **dadurch gekennzeichnet, dass** die Formerkennung eine Messung der Ähnlichkeit zwischen einer vom Gegenstand entnommenen Form und der Bezugsform sowie ebenfalls die Verwendung einer vordefinierten Beziehung aufweist, die eine Wahrscheinlichkeit der Zugehörigkeit (G) zum Typ in Abhängigkeit von der durchgeführten Formähnlichkeitsmessung angibt.

7. Verfahren nach einem der vorhergehenden Ansprüche, **dadurch gekennzeichnet, dass** mindestens ein Typ mehrere Bezugseigenschaften (E1, E2) enthält, dass mindestens zwei Messungen am unbekannten Gegenstand durchgeführt werden, um ein Maß der Nähe zu jeder der beiden Bezugseigenschaften zu erstellen, und dass die Wahrscheinlichkeit der Zugehörigkeit zu diesem Typ unter Verwendung mindestens zweier Beziehungen erstellt wird, die je eine Wahrscheinlichkeit der Zugehörigkeit zum Typ in Abhängigkeit von der Nähe zu einer anderen Eigenschaft angeben, und dass die beiden Wahrscheinlichkeitsbeziehungen verwendet werden, um ein globales Ergebnis der Wahrscheinlichkeit der Zugehörigkeit des Gegenstands zum betrachteten Typ zu erstellen.

8. Verfahren nach dem vorhergehenden Anspruch, **dadurch gekennzeichnet, dass** die mindestens zwei Wahrscheinlichkeitsbeziehungen der Zugehörigkeit zum Typ gemäß einer kombinatorischen Fuzzy-Logik-Technik kombiniert werden, um das Ergebnis der Wahrscheinlichkeit der Zugehörigkeit des Gegenstands zum betrachteten Typ zu liefern.

9. Verfahren nach einem der vorhergehenden Ansprüche, **dadurch gekennzeichnet, dass** eine Fuzzy-Logik-Technik eingesetzt wird, die aus einem Mechanismus besteht, der ausgehend von einer Kombination von Ähnlichkeits-Wahrscheinlichkeiten mit den verschiedenen Eigenschaften des Bezugstyps einen einzigen Wahrscheinlichkeitspegel der Zugehörigkeit zu einem Bezugstyp angibt.

10. Vorrichtung zur automatischen Beschreibung eines unbekannten Multimedia-Gegenstands, die Mittel zur Zuordnung des unbekannten Gegenstands zu mehreren Typen von Bezugs-Multimedia-Gegenständen, jedes Mal gemäß einer Zugehörigkeitswahrscheinlichkeit zum betrachteten Typ (G), aufweist, wobei die Vorrichtung Mittel enthält, um mindestens eine physikalische Eigenschaft am unbekannten Gegenstand (F) zu messen und sie mit Maßen von Eigenschaften zu vergleichen, die die Bezugstypen am besten repräsentieren, wobei die Vorrichtung außerdem Mittel aufweist, die für jeden Typ mindestens eine Wahrscheinlichkeitsbeziehung verwenden, die eine Wahrscheinlichkeit der Zugehörigkeit zum betrachteten Typ in Abhängigkeit vom Ergebnis des Vergleichs der Eigenschaften des unbekannten Gegenstands und des Typs angibt, wobei die Vorrichtung außerdem Mittel aufweist, um die so erhaltenen Wahrscheinlichkeiten der Zugehörigkeit zu den verschiedenen Typen in Kombination mit einer Reihe von Affinitätsbeziehungen zwischen Typen zu verwenden, um Zugehörigkeiten auszuwählen (H), deren Wahrscheinlichkeiten am größten sind und die sich durch ihre Affinitätsbeziehung gemeinsam bezeichnen, und um Zugehörigkeiten auszuschließen, die eine geringere Affinität zu den gewählten Typen haben.

11. Vorrichtung nach Anspruch 10, **dadurch gekennzeichnet, dass** sie Verarbeitungsmittel aufweist, um mehrere Gruppen von Bezugs-Multimedia-Gegenständen (B, C) auszuwerten, wobei jede Gruppe ihren entsprechenden Typ bestmöglich repräsentiert, wobei diese Verarbeitungsmittel außerdem vorgesehen sind, um mindestens eine Messung einer physikalischen Eigenschaft an einer ganzen betrachteten Gruppe durchzuführen und daraus ein Bezugsmaß dieser Eigenschaft abzuleiten, wobei dieses Bezugsmaß anschließend bei der Definition der Beziehung, die eine Zugehörigkeitswahrscheinlichkeit zum betrachteten Typ angibt, als Maß verwendet wird, mit dem die Vorrichtung eine Messung an einem unbekannten Gegenstand vergleicht, um die Wahrscheinlichkeit der Zugehörigkeit zum betrachteten Typ (G) abzuleiten.

12. Vorrichtung nach Anspruch 10 oder nach Anspruch 11, **dadurch gekennzeichnet, dass** sie Mittel aufweist, um einen einleitenden Schritt anzuwenden, an einer Einheit von beschreibenden Gegenständen eine Häufigkeit des Vorkommens der Typen in diesen Gegenständen zu messen und daraus die Existenz einer Affinität zwischen mindestens zwei Typen abzuleiten, wenn diese ein besonderes gleichzeitiges Vorkommen haben.
